# FASCICULE DE BREVET EUROPEEN

(11) **EP 1 653 706 B1**
(45) Date de publication et mention de la délivrance du brevet: **26.09.2007**
(21) Numéro de dépôt: 05292221.8
(22) Date de dépôt: 21.10.2005
(51) Int. Cl.: H04L 29/06

(54) **Procédé de transmission d'un flux vidéo dans un réseau de télécommunications mobiles à débit restreint**
Method of transmission of a video stream in a mobile network with limited bandiwdth
Verfahren zur Übertragung eines Videostroms über ein Mobilfunknetz mit beschränkter Bandbreite

(30) Priorité: 26.10.2004 FR 0452440
(43) Date de publication de la demande: 03.05.2006
(73) Titulaire: Bouygues Telecom, 92100 Boulogne Billancourt (FR)
(72) Inventeur: Fournier, Jean-Philippe, 91430 Igny (FR); Guyard, David, 92100 Boulogne-Billancourt (FR)
(74) Mandataire: Bredema

(56) Documents cités:
- WO-A-00/67435
- US-A- 6 085 251
- US-A1- 2004 093 420

## Description

La présente invention se rapporte au domaine des télécommunications mobiles.

La présente invention concerne plus particulièrement un procédé de transmission d'un flux de données numériques à débit élevé sur un réseau de télécommunications mobiles dans lequel les connexions ont des débits restreints. L'invention s'inscrit dans le cadre de la télésurveillance de lieux mobiles (camions blindés, voitures de police) avec liaison terrestre fixe et lors d'événements ponctuels ne supportant pas d'installation lourde (concerts, salons, manifestations).

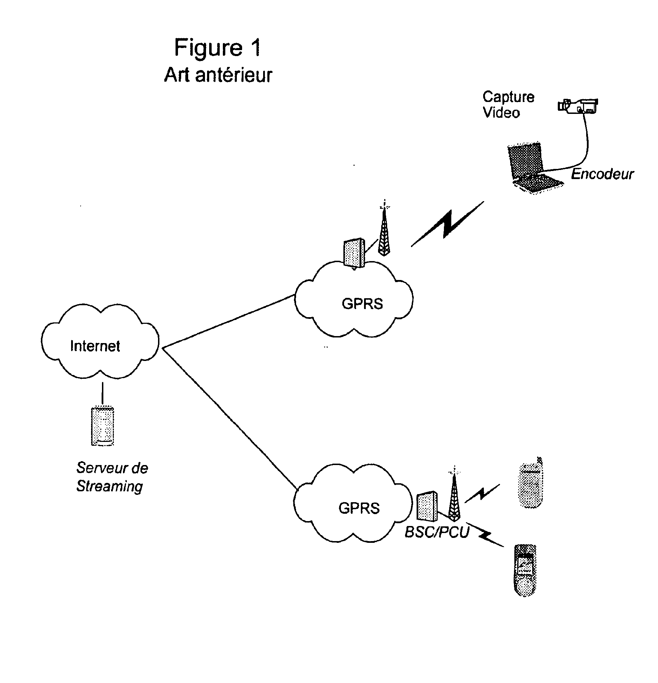

La figure 1 illustre un exemple d'architecture de l'art antérieur dans lequel la présente invention s'applique.
Un dispositif de capture vidéo du type caméra USB est associé à un ordinateur portable. La connexion entre la caméra et l'ordinateur se fait par un câble USB. La caméra est alimentée via le câble USB ; seul l'ordinateur nécessite une alimentation (durée de fonctionnement sur batterie). Le PC embarque un logiciel de compression vidéo en temps réel qui fournit un flux vidéo numérique. La vidéo encodée est relayée vers un serveur de *Streaming* (diffusion) qui se charge de distribuer le flux vidéo aux clients. Plusieurs utilisateurs - possesseurs d'un iPDA (nom commercial) ou d'un terminal mobile - peuvent ainsi accéder en direct au contenu vidéo émis depuis le lieu mobile.
Cependant les téléphones mobiles peuvent être équipés de modem du type GPRS (*General Packet Radio Service)* ou EDGE (*Enhanced Data (Rates) for Global Evolution)* présentant certaines limitations techniques. La principale tient dans la bande passante disponible dans le sens montant *(uplink),* de l'ordre de 20 kbps, très limitative pour le trafic depuis l'encodeur vers le serveur et par conséquent dans la qualité de la vidéo transportée. En effet, le canal GPRS ou EDGE et les modems GPRS ou EDGE équipant les équipements mobiles permettent de diffuser vers un terminal *(downlink)* des flux de données (de la vidéo par exemple) à une bande passante de 40 kbps.

L'art antérieur connaît déjà, par la demande de brevet européen EP 1 126 717 (Lucent), un système de transmission vidéo en temps réel sur un réseau de télécommunications. Un système GPRS, EDGE ou UMTS (*Universal Mobile Telecommunications System)* fournit un service de vidéo en temps réel en sélectionnant un parmi un petit nombre, par exemple quatre, de taux prédéterminés d'encodage de canal applicable pour la vidéo. Le taux est appliqué aux données vidéo au niveau de la couche application et les données sont transmises par l'interface radio à un système mobile auquel il est connecté. Pour chaque paquet, un en-tête indique le taux d'encodage sélectionné. Le court en-tête permet d'accroître la capacité de charge vidéo.

On connaît également, par le brevet américain US 6 578 082 (NORTEL NETWORKS), un système et un procédé de commande de flux distribué pour des réseaux GPRS. Le procédé permet de commander et de réguler le flux de données entre des sources multiples et une seule destination à l'intérieur d'un réseau GPRS. Le système et la méthode assurent la conformité du trafic émis depuis toutes les sources aux conditions prérequises de débit moyen et de pic de débit qui ont été établies par la BSS/PCU (*Packet Control Unit).* Un mécanisme de commande de flux par panier percé (*leacky bucket*) est respectivement utilisé à chacune des multiples sources pour commander le flux de données entre respectivement chacune des sources et l'unique destination. Une taille maximale de mémoire tampon du panier percé et un débit de vidage du mémoire tampon sont définis pour chacun des mécanismes de commande de flux par panier percé. Un multiplicateur est estimé et déterminé pour respectivement chacune des sources basé sur les comportements de réception des données récentes des sources multiples. Les solutions proposées dans l'art antérieur ne permettent pas de transmettre un flux vidéo dont le débit est supérieur à celui du canal de transport des connexions réalisées dans le réseau de télécommunications mobiles. Elles proposent d'adapter le débit de ce flux vidéo aux limites du réseau.

On connaît également, par les demandes US-2004/0093420 et WO-00/67435, des systèmes et procédés conformes au préambule de la revendication 1 ou 9.

La présente invention entend remédier aux inconvénients de l'art antérieur en proposant un procédé de transmission d'un flux de données vidéo de débit élevé, comparé aux débits disponibles sur le réseau de télécommunications mobiles. Ce procédé met en oeuvre des mécanismes réalisant, entre autres, un multiplexage inverse du flux vidéo haut-débit pour diviser celui-ci en une pluralité de flux de moindre débit.
Pour pallier l'asymétrie de l'architecture illustrée par la figure 1 et évoquée précédemment, la présente invention propose d'éclater le flux vidéo de 40 kbps en deux flux différents de 20 kbps chacun et de diffuser ces deux flux sur deux connexions GPRS ou EDGE différentes vers le serveur. Les deux flux sont ensuite recombinés dans le réseau et l'on récupère ensuite un flux descendant de 40 kbps, de qualité équivalente à ce que l'on peut recevoir en GPRS.

Le procédé selon la présente invention répond particulièrement bien au développement des services de téléphonie mobile avec, notamment, l'apparition de la vidéo.

À cet effet, l'invention concerne dans son acception la plus générale un procédé de transmission d'un flux de données numériques entre un programme applicatif d'un équipement émetteur et un programme applicatif d'un équipement récepteur d'un réseau de télécommunications mobiles, selon la revendication 1.

La présente invention se rapporte également à un système de transmission d'un flux de données numériques pour la mise en oeuvre du procédé, selon la revendication 9.

La présente invention se rapporte également, à un système de vidéosurveillance comprenant des moyens de capture vidéo associés à des moyens d'encodage d'un encodeur, un système de transmission d'un flux de données numériques pour la mise en oeuvre du procédé entre ledit encodeur et un serveur de diffusion *(streaming)* et des terminaux mobiles connectés audit serveur de diffusion par ledit réseau de télécommunications mobiles, selon la revendication 17.

On comprendra mieux l'invention à l'aide de la description, faite ci-après à titre purement explicatif, d'un mode de réalisation de l'invention, en référence aux figures annexées :
- la figure 1 représente une architecture de réseau de l'art antérieur dans laquelle s'inscrit l'invention ;
- la figure 2 illustre l'architecture d'un mode de réalisation de la présente invention ;
- la figure 3 représente une architecture système mise en place entre un client « émetteur » et un serveur « récepteur » ;
- la figure 4 représente les échanges lors de l'étape d'initialisation d'une communication ;
- la figure 5 représente les échanges lors de la transmission des données ;
- la figure 6 illustre l'indexation des paquets de données ;
- la figure 7 représente la structure d'une liste chaînée utilisée à la réception des paquets dans la présente invention ;
- la figure 8 représente l'insertion d'un élément (paquet reçu) dans la liste chaînée ; et
- la figure 9 représente les différentes connexions mises en oeuvre dans la présente invention selon le modèle de couches OSI.

La présente invention met en oeuvre un procédé de transmission d'un flux de données numériques de débit élevé, comparé aux débits disponibles pour une connexion sur un réseau de télécommunications. L'invention s'applique particulièrement bien à la transmission de la vidéo haut-débit sur des réseaux de télécommunications du type GPRS, EDGE ou encore UMTS.

Nous précisons ici quelques notions du domaine des réseaux mobiles pour offrir une bonne compréhension de la description faite ci-après.
Le GPRS et a fortiori l'EDGE, version améliorée du GPRS, reposent sur l'infrastructure GSM et notamment utilisent le même canal radio (canal physique) que le GSM. Dans un réseau GPRS ou EDGE, une connexion logique est établie entre un terminal et le réseau par l'intermédiaire des contextes PDP (*Packet Data Protocol),* fournissant une adresse IP au terminal. Une connexion logique de type IP est ensuite établie entre deux terminaux voulant être mis en relation. Cette connexion logique de type IP est généralement une connexion TCP. Dans le cadre de l'invention, cette connexion est établie en mode TCP mais utilisée (c'est-à-dire lors de l'envoi des paquets de données) en mode UDP.
Dans le cas du GPRS, même si le canal radio permet des débits supérieurs à 100 kbit/s, les limitations des modems et des terminaux ne permettent pas de dépasser les 20 kbit/s en voie montante et 40 kbit/s en voie descendante.
L'UMTS met en oeuvre une architecture différente de celle du GSM, reposant sur un canal de transport physique spécifique offrant des services et une qualité de service, notamment l'allocation de canaux en mode circuit à 64 kbit/s garantis et de canaux en mode paquets à 384 kbit/s.

Dans la suite de la description, on entend par canal de transport le canal physique sur lequel sont transmises les données. Pour une connexion logique TCP établie entre deux terminaux, le débit du canal de transport peut être fixe (garanti) ou variable (par exemple en mode paquet).

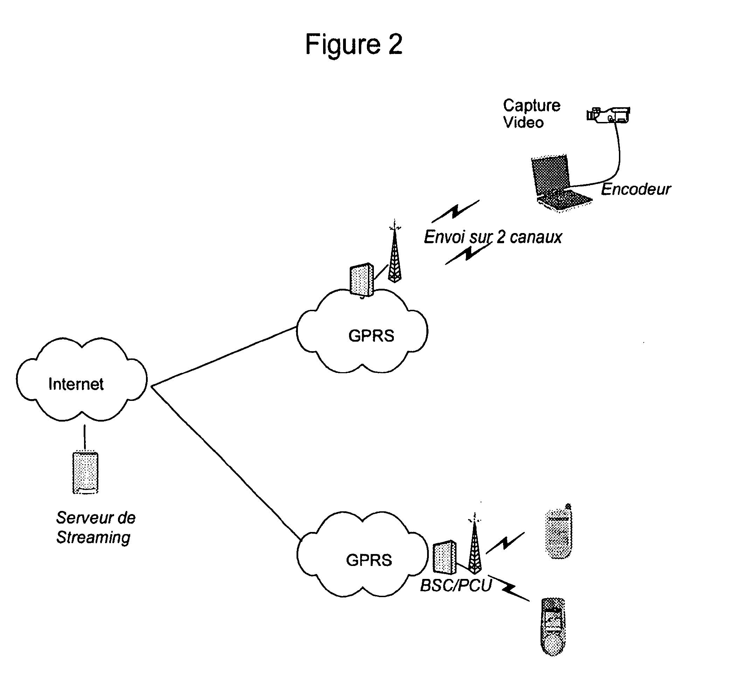

Comme illustré par la figure 2, deux connexions entre l'équipement de capture et le réseau permettent de remonter le flux vidéo de haut débit. Bien entendu, un nombre supérieur de connexions peut être mis en oeuvre sans pour autant sortir du cadre de la présente invention.
Le serveur de *streaming* est un serveur qui recombine et stocke les données de contenus vidéo envoyées sur les deux canaux de transport associés aux deux connexions GPRS avant de les diffuser sur le réseau de transmission. Il est ici distant de l'encodeur, et accessible depuis Internet. Ainsi la limitation de la bande passante n'a pas lieu entre serveur et clients mais entre encodeur et serveur. Les réseaux d'émission et de transmission sont ici différents. Dans un mode de réalisation particulier, le réseau d'émission appartient à un opérateur différent du réseau de transmission. C'est notamment le cas lorsqu'un seul opérateur est disponible à l'emplacement de l'encodeur de contenu vidéo.
Pour pallier ce problème de limitation de la bande passante, l'invention propose une « application de multiplexage inverse » qui permet d'accroître (de doubler) la bande passante dans le sens montant. Dans ce dessein, le PC portable auquel est reliée la caméra doit posséder deux cartes GPRS classe 10 pour pouvoir envoyer le flux vidéo encodé sur deux canaux de transport. Cette solution apparaît très adaptée à la surveillance vidéo depuis un lieu mobile.

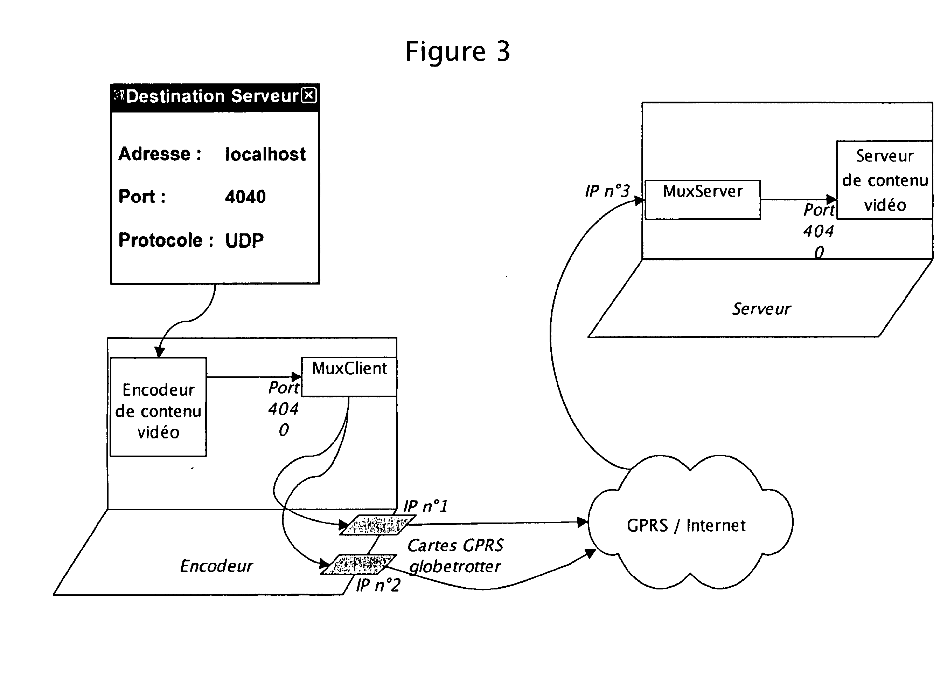

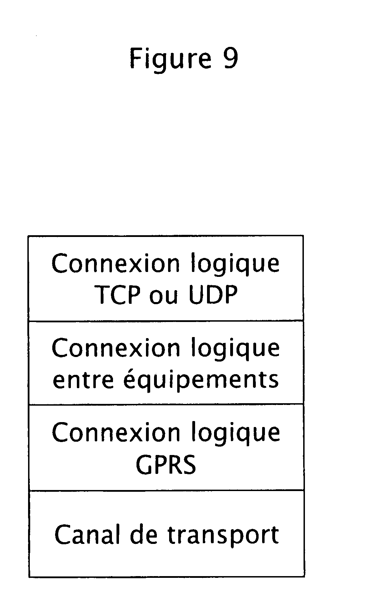

L'application de multiplexage inverse de paquets est dépendante du couple encodeur/serveur de *streaming* choisi et se décompose aussi en deux parties : un client émetteur du flux, MuxClient, et un serveur récepteur, MuxServer, chacune solidaire des machines où tournent respectivement l'encodeur et le serveur de *streaming.* La figure 3 détaille une mise en oeuvre au niveau de l'encodeur et du serveur.
L'application de multiplexage est transparente pour le couple encodeur/serveur : le flux de données échangé n'est pas altéré. Cependant il est nécessaire d'indiquer comme destinataire à l'encodeur de contenu vidéo l'adresse IP locale (« localhost ») et non l'adresse IP distante de la machine serveur. En effet, c'est l'application MuxClient qui se charge de capturer le flux vidéo encodé et de le transférer au serveur de contenu vidéo, par l'intermédiaire de MuxServer.
En référence à la figure 3, la machine cliente (« Encodeur »), sur laquelle tournent l'encodeur de contenu vidéo et MuxClient, possède deux cartes GPRS, soit 2 adresses IP publiques IP n°1 et IP n°2. La machine serveur, quant à elle, ne possède qu'une seule adresse IP (IP n°3) et collecte les deux flux de données provenant de IP n°1 et n°2 sur le même port. Suite à l'établissement des connexions logiques GPRS des deux cartes au réseau de télécommunication, deux autres connexions logiques sont réalisées entre les adresses IP n°1 et IP n°3, et IP n°2 et IP n°3 par la création d'une *socket* sur chacune des cartes. Nous appellerons « connexion », dans la suite de la description, ces deux (ou plus) autres connexions logiques entre les différentes adresses IP devant communiquer entre elles. Cette connexion diffère de la connexion logique GPRS et de la connexion TCP en ce qu'elle met en liaison deux adresses IP par l'intermédiaire de *sockets.* La figure 9 illustre un empilement simplifié des couches selon le modèle OSI : le canal de transport correspond à la couche physique, la connexion logique GPRS est plus basse que la connexion logique entre les adresses par l'intermédiaire des *sockets,* et la connexion logique TCP est la plus haute en ce qu'elle réalise la mise en relation des deux programmes applicatifs d'extrémité.
Concernant la transmission des données entre l'équipement émetteur (MuxClient) et l'équipement de réception (MuxServer), le protocole de la couche « transport » (couche 4 dans le modèle OSI) choisi est l'UDP *(User Datagram Protocol),* mais un dialogue TCP *(Transfer Control Protocol)* s'établit au préalable entre l'encodeur et le serveur pour l'initialisation de la connexion logique TCP entre les deux entités. L'utilisation du protocole UDP permet de s'affranchir d'une partie de la qualité de service fournie par un protocole tel TCP. En effet, UDP ne nécessite pas l'acquittement des paquets lors de la réception : aucun contrôle de flux n'est réalisé. La vidéo n'est pas particulièrement sensible à la perte de paquet (a contrario, des données telles un fichier informatique ne peuvent être utilisées si un seul paquet a été perdu), d'où l'utilisation de ce protocole.

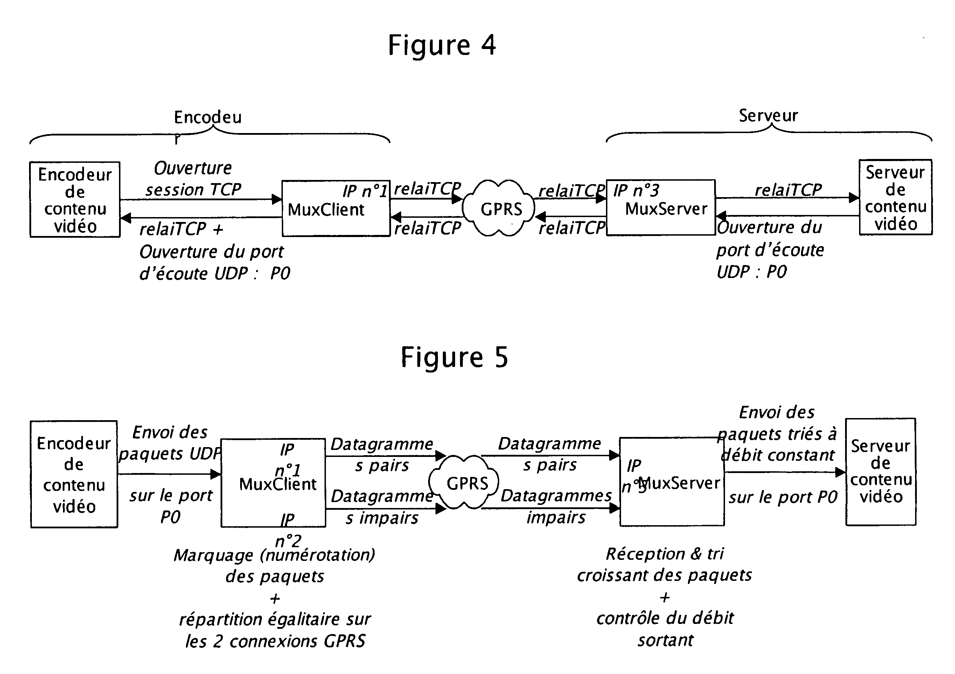

Pendant cette première phase d'initialisation, illustrée par la figure 4, MuxClient ne fait que relayer les paquets TCP émis par l'encodeur vers le MuxServer, qui relaie à son tour les paquets vers le serveur de *streaming.* Une seule des deux connexions logiques GPRS est utile pour cette première phase.
Lors de ce dialogue, le serveur de contenu vidéo transmet à l'encodeur un numéro de port sur lequel il accepte de recevoir les paquets UDP (aussi appelés datagrammes) du flux vidéo encodé. Ce numéro de port est alors identifié dans ces paquets UDP par MuxServer, qui le signale à MuxClient. Ce dernier va lui ouvrir ce même numéro de port sur la machine où tourne l'encodeur de contenu vidéo et ainsi détourner le flux émis par l'encodage.
Une fois l'ouverture de session TCP acceptée par le serveur de contenu vidéo, l'encodeur de contenu vidéo commence le transfert UDP du flux vidéo encodé vers le port P0 de la même machine.

En référence à la figure 5, MuxClient, ayant ouvert ce port en mode écoute, réceptionne les paquets UDP et leur attribue un numéro avant de les distribuer de manière égalitaire - suivant leur parité - alternativement sur chacune des deux connexions pour les envoyer vers la machine serveur distante. Dans un mode de réalisation avec N connexions, une distribution des paquets peut, de façon similaire, distribuer alternativement un paquet sur la première connexion, puis sur la suivante jusque sur la N^{ième} avant de repasser par la première. L'alternance peut tout aussi bien être désorganisée (troisième connexion puis N^{ième} puis première, ...), voire adaptée au débit des canaux de transport des connexions si l'un d'entre eux présente des caractéristiques différentes permettant, par exemple, de transmettre plus de paquets.

Deux flux de paquets UDP sont ainsi réceptionnés par MuxServer, sur deux ports différents, autres que le port P0 préalablement imposé par le serveur de contenu vidéo. MuxServer effectue un classement par index croissant des paquets pairs et impairs en prenant en compte les pertes éventuelles. La séquence des paquets triés est envoyée sur le port d'écoute du serveur de contenu vidéo selon un processus de « panier percé » permettant la gestion du débit sortant, en fonction du débit désiré au niveau de l'encodeur.
Dans une variante, le MuxClient dispose de deux mémoires tampon, par exemple de type circulaire, dans lesquelles il dirige les paquets avant que ceux-ci ne soient diffusés sur l'une ou l'autre des connexions. Les mémoires tampon sont ensuite remplies en fonction de la vitesse de transmission de chacune des connexions (vitesse liée au débit disponible sur les canaux de transport associés aux connexions) : les paquets sont envoyés vers la mémoire tampon la plus disponible (celle qui s'est vidée le plus rapidement). Ceci permet, notamment, de favoriser la connexion la plus efficace (rapide) et d'optimiser le débit total indépendamment des variations de débit sur l'une ou l'autre connexion.
Dans une variante améliorée, des paquets de redondance du type FEC *(Forward Error Correction)* et Reed-Salomon, sont aussi diffusés pour pallier une éventuelle perte de paquets.

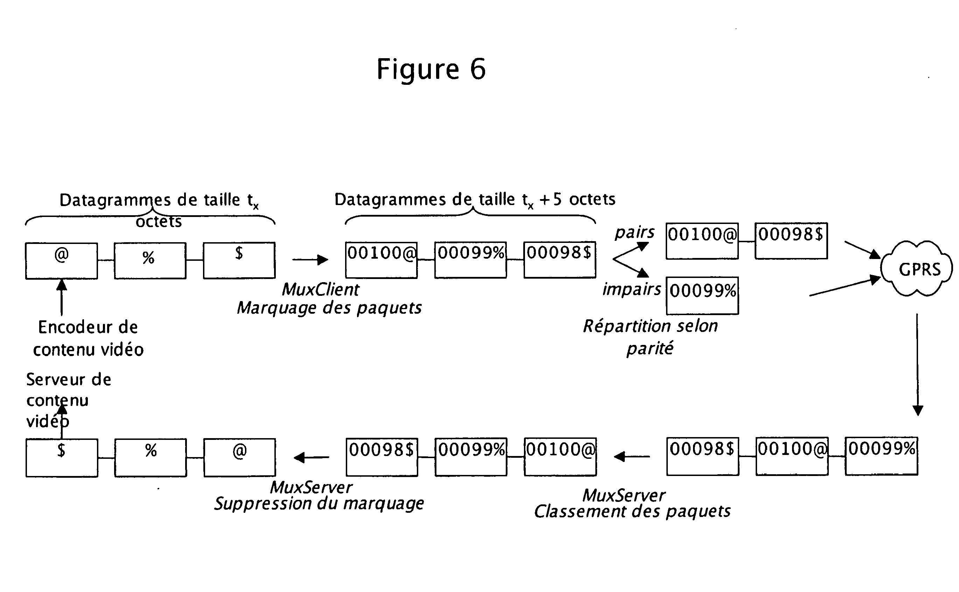

Dans un mode de réalisation de la présente invention illustré par la figure 6, les datagrammes émis par l'encodeur ont une taille variable ne dépassant pas 1460 octets. Le marquage des paquets par MuxClient utilise 5 octets pour un horodatage ou une numérotation cyclique allant de « 00000 » à « 99999 ». Ce numéro est ajouté au début du paquet, augmentant ainsi sa taille de 5 octets. MuxServer extrait alors ce numéro pour la procédure d'ordonnancement, et redimensionne le paquet à sa taille d'origine avant de le transmettre au serveur de *streaming.*

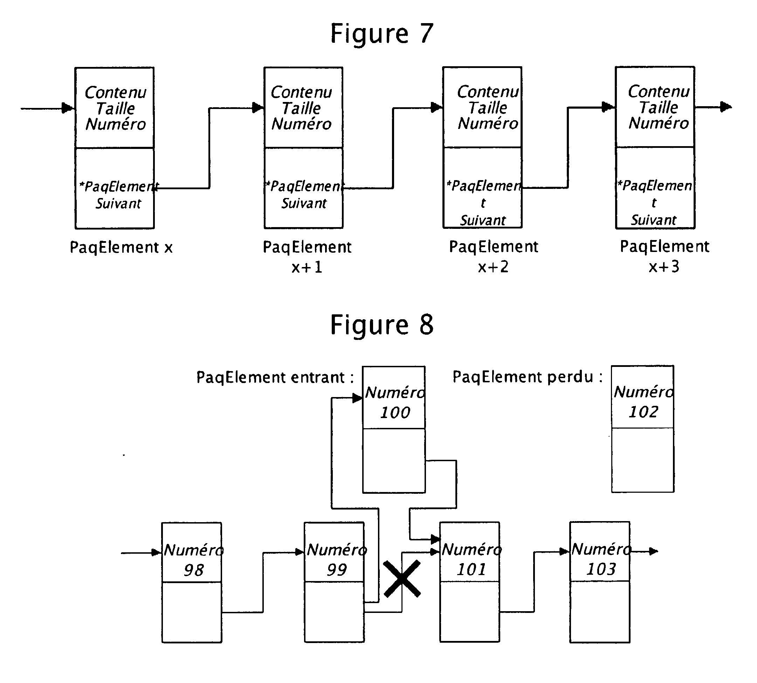

L'algorithme de tri se base sur le principe de « listes chaînées simples », dont une représentation est fournie par la figure 7. À chaque arrivée d'un paquet, on crée un élément PaqElement, qui contient le contenu du paquet en caractères hexadécimaux, sa taille, son numéro de séquence et un pointeur sur le PaqElement suivant.
L'algorithme classe les paquets entrants par leur numéro de séquence : il parcourt la liste depuis le premier paquet jusqu'au paquet dont le numéro est juste inférieur. Cette tactique permet de ne pas attendre les paquets éventuellement perdus. En référence à la figure 8, lorsque l'élément inférieur a été trouvé, le paquet nouvellement reçu est inséré dans la liste chaînée.
Afin de réguler le flux de paquets arrivant de manière aléatoire au niveau de MuxServer, on utilise un algorithme de panier percé (« *leaky bucket* » en anglais), utilisant une mémoire tampon *(bucket)* et un régulateur. La mémoire tampon doit être suffisamment grande pour ne pas se vider mais suffisamment petite pour, d'une part, ne pas consommer trop de mémoire dynamique et, d'autre part, ne pas parcourir une liste trop longue lors du classement des paquets par ordre croissant. Cette méthode permet de transférer les paquets suivant un débit spécifié, calculé en fonction du débit précisé à l'encodage. Le serveur de contenu vidéo reçoit alors les paquets à intervalles réguliers, ce qui évite les gels d'image ou les effets de vidéo saccadée. Tout autre type d'algorithme de correction d'absence de paquet vidéo peut, bien entendu, être mis en oeuvre dans le cadre du brevet.

La présente invention s'inscrit parfaitement dans le cadre de nouveaux services en téléphonie mobile tels que la transmission de vidéo. Parmi les applications qui utilisent la vidéo comme médium de communication, les applications d'observation de site sont intéressantes que ce soit pour des usages professionnels ou privés. On peut citer comme exemple des applications de surveillance de site sensible (l'intérieur d'un fourgon de transport de fond, l'environnement d'un véhicule de surveillance, d'un véhicule de police), et des applications type observation d'une pièce du domicile (surveillance d'un bébé).

## Revendications

1. Procédé de transmission d'un flux de données numériques entre un programme applicatif d'un équipement émetteur et un programme applicatif d'un équipement récepteur d'un réseau de télécommunications mobiles, le débit dudit flux de données étant supérieur à la capacité de transmission du canal de transport d'une connexion dans ledit réseau, comprenant :
- une étape d'indexation de paquets de données dudit flux de données numériques ;
- une étape de répartition et de transmission desdits paquets indexés sur au moins deux connexions entre lesdits deux équipements ;
- une étape de réception, par ledit équipement récepteur, des paquets transmis sur les au moins deux connexions ;
**caractérisé par le fait que** le procédé comprend, en outre, une étape de constitution, par ledit équipement récepteur, d'une liste chaînée de paquets de données à partir desdits paquets reçus.

2. Procédé de transmission selon la revendication 1, dans lequel ladite liste chaînée est ordonnée selon les index.

3. Procédé de transmission selon la revendication précédente, dans lequel l'étape de constitution comprend une étape d'insertion d'un paquet nouvellement reçu dans ladite liste chaînée à l'emplacement correspondant à son index.

4. Procédé de transmission selon l'une des revendications précédentes, comprenant, en outre, une étape d'envoi de la liste chaînée à un serveur de contenus selon un processus de « panier percé ».

5. Procédé de transmission selon l'une quelconque des revendications précédentes, dans lequel lesdits paquets sont répartis alternativement sur chacune desdites connexions, lors de l'étape de répartition.

6. Procédé de transmission selon l'une quelconque des revendications 1 à 4, dans lequel ladite répartition est fonction des débits de transmission associés auxdites connexions.

7. Procédé de transmission selon l'une des revendications 1 à 4, dans lequel ladite étape de répartition met en oeuvre des mémoires tampons associées au canal de transport de chacune desdites connexions et, ladite répartition d'un paquet est réalisée sur la mémoire tampon la plus disponible.

8. Procédé de transmission selon la revendication précédente, dans lequel lesdites mémoires tampon sont circulaires.

9. Système de transmission d'un flux de données numériques pour la mise en oeuvre du procédé selon l'une quelconque des revendications précédentes, comprenant un équipement d'émission et un équipement de transmission entre lesquels s'établissent des connexions sur un réseau de télécommunications mobiles, dans lequel,
- la capacité de transmission du canal de transport de chacune des connexions dudit réseau est inférieure au débit dudit flux de données numériques ;
- ledit équipement d'émission comprend des moyens d'indexation des paquets dudit flux de données numériques, des moyens de répartition et de transmission desdits paquets sur au moins deux connexions entre les deux équipements ;
- ledit équipement de réception comprend des moyens de réception desdits paquets transmis, des moyens de reconstruction dudit flux de données numériques à partir des paquets reçus,
le système étant **caractérisé par le fait que** lesdits moyens de reconstruction comprennent une liste chaînée de paquets de données établie à partir desdits paquets reçus.

10. Système selon la revendication 9, dans lequel les moyens de reconstruction sont agencés pour maintenir ordonnée ladite liste chaînée, l'ordonnancement étant fonction des index desdits paquets.

11. Système selon la revendication précédente, dans lequel les moyens de reconstruction sont agencés pour insérer un paquet nouvellement reçu dans ladite liste chaînée à l'emplacement correspondant à son index.

12. Système selon l'une quelconque des revendications 9 à 11, comprenant, en outre, un serveur de contenus et dans lequel ledit équipement de réception est agencé pour transmettre ladite liste chaînée audit serveur de contenus selon un processus de « panier percé ».

13. Système selon l'une quelconque des revendications 9 à 12, dans lequel les moyens de répartition sont agencés pour répartir lesdits paquets alternativement sur les connexions en fonction des débits de transmission associés auxdites connexions.

14. Système selon l'une quelconque des revendications 9 à 12, dans lequel lesdits moyens de transmission comprennent au moins deux mémoires tampons associées aux canaux de transport desdites connexions, et lesdits moyens de répartition sont agencés pour attribuer un paquet dans la mémoire tampon la plus disponible.

15. Système selon l'une quelconque des revendications 10 à 14, dans lequel les éléments de ladite liste chaînée comprennent le contenu d'un paquet de données, l'index dudit paquet, la taille dudit paquet et un pointeur vers l'élément suivant dans ladite liste chaînée ordonnée.

16. Système de transmission selon l'une quelconque des revendications 9 à 15, dans lequel ledit réseau de télécommunications est d'une technologie choisie parmi le GPRS, l'EDGE et l'UMTS.

17. Système de vidéosurveillance comprenant des moyens de capture vidéo associés à des moyens d'encodage d'un encodeur, un système de transmission selon l'une quelconque des revendications 9 à 16 entre ledit encodeur et un serveur de diffusion et des terminaux mobiles connectés audit serveur de diffusion par ledit réseau de télécommunications mobiles.

## Claims

1. - A method for transmitting a digital data flow between an application program of an emitting device and an application program of a receiving device in a mobile telecommunications network, the rate of said data flow being greater than the transmission capacity of the transfer channel of one connexion in said network including:
- one step of indexing the data packets of said digital data flow;
- one step of distributing and transmitting said indexed packets among at least two connexions between said two devices;
- one step of receiving, by said receiving device, the packets transmitted on the at least two connexions;
**characterised in that** the method further includes one step of drawing up a chained list of data packets from said received packets, by said receiving device .

2. - A transmission method according to Claim 1, wherein said chained list is ordered as per the indexes.

3. - A transmission method according to the preceding Claim, wherein the list drawing up step includes a step of inserting a newly received packet into the chained list, at the location corresponding to its index.

4. - A transmission method according to one of the preceding Claims further including a step of sending the chained list to a contents server, according to a "leaky bucket" process.

5. - A transmission method according to any one of the preceding Claims, wherein said packets are distributed alternately on each one of said connexions, during the distribution step.

6. - A transmission method according to any one of Claims 1 to 4, wherein said distribution depends on the transmission rates associated with such connexions.

7. -A transmission method according to one of Claims 1 to 4, wherein said distribution step implements buffer memories associated to the transfer channel of each of said connexions and said packet distribution is made on the most readily available buffer memory.

8. - A transmission method according to the preceding Claim, wherein said buffer memories are of circular shape.

9. - A system for transmitting a digital data flow for implementing a method according to any one of the preceding claims, including an emitting device and a receiving device between which connexions are established on a mobile telecommunication network, wherein:
- the transmission capacity of the transfer channel of each of the connexions of said network is lower than the rate of said digital data flow;
- said emitting device includes means for indexing the packets of said digital data flow, and means for distributing and transmitting said packets on at least two connexions between the two devices;
- said receiving device includes means for receiving said transmitted packets, and means for restoring said digital data flow from the received packets,
the system being **characterised in that** said restoring means include a chained list of data packets drawn up from said received packets.

10. - A system according to Claim 9, wherein the restoring means are arranged for maintaining the order of said chained list, the ordering depending on the indexes of said packets.

11. - A system according to the preceding Claim, wherein the restoring means are arranged for inserting a newly received packet into said chained list, at the location corresponding to its index.

12. - A system according to any one of Claims 9 to 11 further including a contents server and wherein said receiving device is so arranged as to transmit said chained list to said contents server, according to a so-called "leaky bucket" process.

13. - A system according to any one of Claims 9 to 12, wherein the distribution means are so arranged as to distribute said packets alternately on the connexions, depending on the transmission rates associated with said connexions.

14. - A system according to any one of Claims 9 to 12, wherein said transmission means include at least two buffer memories associated with the transfer channels of said connexions, and said distribution means are so arranged as to assign a packet into the most readily available buffer memory.

15. - A system according to any one of Claims 10 to 14, wherein the elements of said chained list include the contents of a data packet, the index of said packet, the size of said packet and a pointer to the next element in said ordered chained list.

16. - A system according to any one of Claims 9 to 15, wherein said telecommunication network has a technology chosen among GPRS, EDGE and UMTS.

17. - A video surveillance system including video capture means associated with encoding means of an encoder, a transmission system according to any one of Claims 9 to 16 between said encoder and a dissemination server and mobile terminals connected to said dissemination server through said mobile telecommunication network.

## Patentansprüche

1. Verfahren für die Übertragung eines Digitaldatenflusses zwischen einem Anwendungsprogramm einer Sendeausrüstung und einem Anwendungsprogramm einer Empfangsausrüstung eines mobilen Telekommunikationsnetzes, wobei die Datenflußrate über der Übertragungskapazität des Transportkanals eines Anschlusses im besagten Netz liegt, das umfaßt:
- Einen Schritt für die Indexierung der Datenpakete des besagten Digitaldatenflusses;
- Einen Schritt für die Verteilung und die Übertragung der besagten indexierten Datenpakete auf mindestens zwei Anschlüsse zwischen den besagten beiden Ausrüstungen;
- Einen Schritt mit dem Empfang der Pakete bei der besagten Empfangsausrüstung, die auf den mindestens zwei Anschlüssen übertragen wurden;
**Dadurch gekennzeichnet, daß** das Verfahren ferner einen Schritt mit der Aufstellung einer verketteten Liste von Datenpaketen durch die besagte Empfangsausrüstung ausgehend von den besagten empfangenen Paketen umfaßt.

2. Verfahren für die Übertragung nach Anspruch 1, **dadurch gekennzeichnet, daß** die besagte verkettete Liste nach den Indexen geordnet ist.

3. Verfahren für die Übertragung nach dem vorstehenden Anspruch, **dadurch gekennzeichnet, daß** der Schritt mit der Aufstellung einen Schritt mit der Einfügung eines neu empfangenen Pakets in die besagte verkettete Liste an der seinem Index entsprechenden Stelle umfaßt.

4. Verfahren für die Übertragung nach einem beliebigen der vorstehenden Ansprüche, **dadurch gekennzeichnet, daß** es außerdem einen Schritt mit Versand der verketteten Liste an einen Server mit Inhalten nach einem "Faß ohne Boden" Verfahren umfaßt.

5. Verfahren für die Übertragung nach einem beliebigen der vorstehenden Ansprüche, **dadurch gekennzeichnet, daß** die besagten Pakete beim Schritt mit der Verteilung abwechselnd auf jeden der besagten Anschlüsse verteilt werden.

6. Verfahren für die Übertragung nach einem beliebigen der vorstehenden Ansprüche 1 bis 4, **dadurch gekennzeichnet, daß** die besagte Verteilung von den Übertragungsraten abhängt, die zu den besagten Anschlüssen gehören.

7. Verfahren für die Übertragung nach einem beliebigen der vorstehenden Ansprüche 1 bis 4, **dadurch gekennzeichnet, daß** beim besagten Schritt mit der Verteilung Pufferspeicher eingesetzt werden, die zum Transportkanal jeder dieser besagten Verbindungen gehören, und daß die besagte Verteilung eines Pakets auf dem am besten zur Verfügung stehenden Pufferspeicher realisiert wird.

8. Verfahren für die Übertragung nach dem vorstehenden Anspruch, **dadurch gekennzeichnet, daß** die besagten Pufferspeicher kreisförmig sind.

9. System für die Übertragung eines Digitaldatenflusses für den Einsatz des Verfahrens nach einem beliebigen der vorstehenden Ansprüche, das eine Sendeausrüstung und eine Übermittlungsausrüstung umfaßt, zwischen denen die Verbindungen in einem mobilen Telekommunikationsnetz aufgebaut werden, in dem
- Die Übertragungskapazität des Transportkanals jedes Anschlusses des besagten Netzes unter der Flußrate des besagten Digitaldatenflusses liegt;
- Die Sendeausrüstung Mittel zur Indexierung der Pakete des besagten Digitaldatenflusses Mittel für die Verteilung und die Übermittlung der besagten Pakete auf mindestens zwei Anschlüssen zwischen den beiden Ausrüstungen umfaßt;
- Die besagte Empfangsausrüstung Mittel für den Empfang der besagten übermittelten Pakete und Mittel für den Wiederaufbau des besagten Digitaldatenflusses ausgehend von den empfangenen Paketen umfaßt;
Wobei das System **dadurch gekennzeichnet ist, daß** die besagten Mittel für den Wiederaufbau eine verkettete Liste von Datenpaketen umfassen, die ausgehend von den besagten empfangenen Paketen erstellt wurde.

10. System nach Anspruch 9, **dadurch gekennzeichnet, daß** die Mittel für den Wiederaufbau so gestaltet sind, daß die besagte verkettete Liste geordnet gehalten wird, wobei die Ordnung von den Indexen der besagten Pakete abhängt.

11. System nach dem vorstehenden Anspruch, **dadurch gekennzeichnet, daß** die Mittel für den Wiederaufbau so gestaltet sind, daß ein neu erhaltenes Paket in die besagte verkettete Liste an die Stelle eingefügt wird, die seinem Index entspricht.

12. System nach einem beliebigen der vorstehenden Ansprüche 9 bis 11, **dadurch gekennzeichnet, daß** es ferner einen Inhaltsserver umfaßt, in dem die besagte Empfangsausrüstung für die Übertragung der besagten verketteten Liste an den besagten Inhaltsserver nach einem "Faß ohne Boden" Verfahren gestaltet ist.

13. System nach einem beliebigen der vorstehenden Ansprüche 9 bis 12, **dadurch gekennzeichnet, daß** die Verteilungsmittel so gestaltet sind, daß die besagten Pakete je nach den zu den besagten Anschlüssen gehörigen Übertragungsraten abwechselnd auf die Anschlüsse verteilt werden.

14. System nach einem beliebigen der vorstehenden Ansprüche 9 bis 12, **dadurch gekennzeichnet, daß** die besagten Übertragungsmittel mindestens zwei zu den Transportkanälen der besagten Anschlüsse gehörigen Pufferspeicher umfassen, und daß die besagten Verteilungsmittel so gestaltet sind, daß ein Paket dem am besten verfügbaren Pufferspeicher zugeteilt wird.

15. System nach einem beliebigen der vorstehenden Ansprüche 10 bis 14, **dadurch gekennzeichnet, daß** die Elemente der besagten verketteten Liste den Inhalt eines Datenpakets umfassen, sowie den Inhalt eines Datenpakets, den Index des besagten Pakets, die Größe des besagten Pakets und einen Zeiger zum nachfolgenden Element in der besagten geordneten verketteten Liste.

16. System für die Übertragung nach einem beliebigen der vorstehenden Ansprüche 9 bis 15, **dadurch gekennzeichnet, daß** das besagte Telekommunikationsnetz einer Technologie angehört, die unter GPRS, EDGE und UMTS gewählt wurde.

17. System für die Videoüberwachung, das Mittel für die Videoerfassung zusammen mit Codierungsmitteln eines Codierers umfaßt, ein System für die Übertragung nach einem beliebigen der vorstehenden Ansprüche 9 bis 16 zwischen dem besagten Codierer und einem Sendeserver und mobilen Terminals, die durch das besagte mobile Telekommunikationsnetz an den besagten Sendeserver angeschlossen sind.
